(19) **Europäisches Patentamt European Patent Office Office européen des brevets**

(11) **EP 4 711 799 A1**

(12) **EUROPEAN PATENT APPLICATION**
published in accordance with Art. 153(4) EPC

(43) Date of publication:
**18.03.2026 Bulletin 2026/12**

(51) International Patent Classification (IPC):
**G01S 5/18** (2006.01)  **H04W 4/40** (2018.01)

(21) Application number: **24803749.1**

(52) Cooperative Patent Classification (CPC):
**G01S 5/18; H04W 4/40**

(22) Date of filing: **09.05.2024**

(86) International application number:
**PCT/KR2024/006281**

(87) International publication number:
**WO 2024/232696 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 KR 20230059886**

(71) Applicant: **LG Electronics Inc.**
**Yeongdeungpo-gu**
**Seoul 07336 (KR)**

(72) Inventors:
• **HWANG, Jaeho**
  **Seoul 06772 (KR)**
• **KIM, Hakseong**
  **Seoul 06772 (KR)**
• **SEO, Hanbyul**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR MEASURING POSITION IN WIRELESS COMMUNICATION SYSTEM**

(57)     According to various embodiments, disclosed are a method, performed by a terminal, for measuring a position in a wireless communication system, and an apparatus therefor. Disclosed are a method and an apparatus therefor, the method comprising the steps of: obtaining anchor list information about a plurality of anchors and information about vector correction fields; calculating a first position value on the basis of TDoA positioning using three anchors selected from among the plurality of anchors; on the basis of the first position value being calculated without considering the heights of the three anchors, correcting the first position value by applying, among the vector correction fields, a vector correction field corresponding to the arrangement of the three anchors; and determining the position on the basis of the corrected first position value.

FIG. 17

Description

TECHNICAL FIELD

The present disclosure relates to a method of measuring a position by a user equipment (UE) in a wireless communication system and an apparatus for the same.

BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

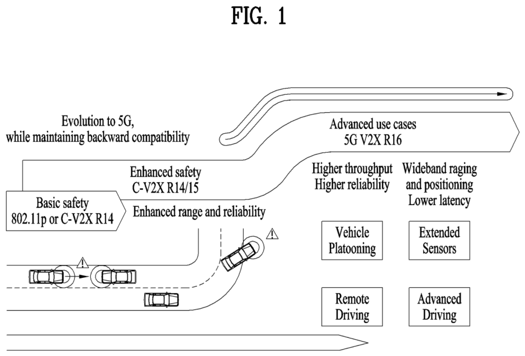

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

## DISCLOSURE

### TECHNICAL PROBLEM

The object of the present disclosure is to provide a method of accurately and efficiently measuring the position of a user equipment (UE) in a wireless communication system and an apparatus for the same.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of measuring a position by a user equipment (UE) in a wireless communication system. The method may include: acquiring anchor list information for a plurality of anchors and information on vector correction fields; calculating a first position value based on Time Difference of Arrival (TDoA) positioning using three anchors selected from among the plurality of anchors; based on the first position value being calculated without considering heights of the three anchors, correcting the first position value by applying a vector correction field corresponding to an arrangement of the three anchors among the vector correction fields; and determining a position of the UE based on the corrected first position value.

Alternatively, the vector correction field may include correction vectors calculated in advance based on a difference between a position value calculated without considering the heights of the three anchors and a position value calculated considering the heights of the three anchors.

Alternatively, the vector correction fields may be generated in advance for combinations of three selectable anchors among the plurality of anchors.

Alternatively, based on that one of reception time differences calculated using the three anchors is greater than or equal to a specific threshold time, the first position value may be corrected by applying the vector correction field.

Alternatively, the UE may quantify quality of acoustic signals received from the plurality of anchors and select the three anchors based on the quantified quality of the acoustic signals.

Alternatively, the quantified quality of the acoustic signals may include information on a number of signals having a signal strength greater than or equal to a first threshold value and a number of signals having a signal strength between the first threshold value and a second threshold value for each of the plurality of anchors.

Alternatively, the vector correction fields may be corrected based on at least one of temperature and humidity.

Alternatively, the UE may perform the TDoA positioning using acoustic signals received from the three anchors.

In another aspect of the present disclosure, provided herein is a computer-readable recording medium having recorded thereon a program for executing the above-described method of measuring a position.

In another aspect of the present disclosure, provided herein is a UE configured to perform the above-described method of measuring a position.

In another aspect of the present disclosure, provided herein is a processing device configured to control a UE that performs the above-described method of measuring a position.

In another aspect of the present disclosure, provided herein is a method of measuring a position of a UE by a network in a wireless communication system. The method may include: transmitting anchor list information for a plurality of anchors to the UE; receiving, from the UE, a first position value of the UE calculated using three anchors among the plurality of anchors; based on the first position value being calculated without considering heights of the three anchors, correcting the first position value to a second position value by using a vector correction field corresponding to an arrangement of the three anchors among predefined vector correction fields; and determining the second position value as the position of the UE.

In another aspect of the present disclosure, provided herein is a computer-readable recording medium having recorded thereon a program for executing the above-described method of measuring a position of a UE.

In another aspect of the present disclosure, provided herein is a network configured to perform the above-described method of measuring a position of a UE.

In a further aspect of the present disclosure, provided herein is a processing device configured to control a network that performs the above-described method of measuring a position of a UE.

## ADVANTAGEOUS EFFECTS

According to an embodiment, the position of a user equipment (UE) may be accurately and efficiently measured in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.

FIG. 1 is a diagram for explaining by comparing V2X communication based on RAT before NR and V2X communication based on NR.

FIG. 2 illustrates the structure of an LTE system to which embodiment(s) are applicable.

FIG. 3 illustrates the structure of an NR system to which embodiment(s) are applicable.

FIG. 4 illustrates the structure of an NR radio frame to which embodiment(s) are applicable.

FIG. 5 illustrates the slot structure of an NR frame to which embodiment(s) are applicable.

FIG. 6 shows a communication structure providable in a 6G system, based on an embodiment of the present disclosure.

FIG. 7 shows an electromagnetic spectrum, based on an embodiment of the present disclosure.

FIG. 8 shows an example of an NTN typical scenario based on a transparent payload, based on an embodiment of the present disclosure.

FIG. 9 shows an example of an NTN typical scenario based on a regenerative payload, based on an embodiment of the present disclosure.

FIG. 10 shows an example of a sensing operation, based on an embodiment of the present disclosure.

FIG. 11 illustrates a radio protocol architecture for SL communication.

FIG. 12 illustrates UEs performing V2X or SL communication.

FIG. 13 illustrates resource units for V2X or SL communication.

FIG. 14 shows an example of a BWP, based on an embodiment of the present disclosure.

FIG. 15 shows a procedure of performing V2X or SL communication by a UE based on a resource allocation mode, based on an embodiment of the present disclosure.

FIG. 16 is a diagram illustrating an observed time difference of arrival (OTDOA) positioning method, to which the embodiment is applicable;

FIG. 17 and FIG. 18 are diagrams for explaining an acoustic positioning method.

FIG. 19 and FIG. 20 are diagrams for explaining characteristics of acoustic signals used in an acoustic positioning system.

FIG. 21 is a diagram for explaining a method of measuring the position of a UE based on an acoustic signal.

**EP 4 711 799 A1**

FIG. 22 and FIG. 23 are diagrams for explaining a method of measuring the position of a UE based on an acoustic signal and a block diagram of an apparatus for the same.

FIG. 24 is a diagram for explaining a method in which a UE estimates a first signal among multipath signals.

FIGS. 25 to 28 are diagrams for explaining a method of compensating for distortion occurring when a UE performs positioning using three anchors.

FIG. 29 is a diagram for explaining a method in which a UE corrects a position using a vector correction field.

FIG. 30 is a diagram for explaining a method in which a network corrects the position of a UE using a vector correction field.

FIG. 31 illustrates a communication system applied to the present disclosure.

FIG. 32 illustrates wireless devices applicable to the present disclosure.

FIG. 33 illustrates another example of a wireless device to which the present disclosure is applied.

FIG. 34 illustrates a vehicle or an autonomous driving vehicle applied to the present disclosure

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

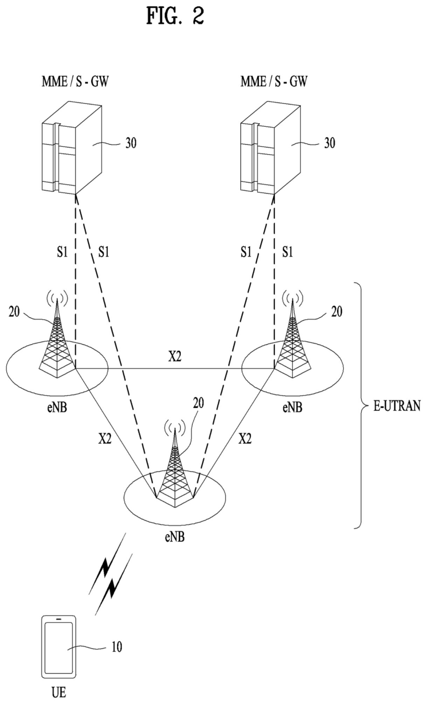

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

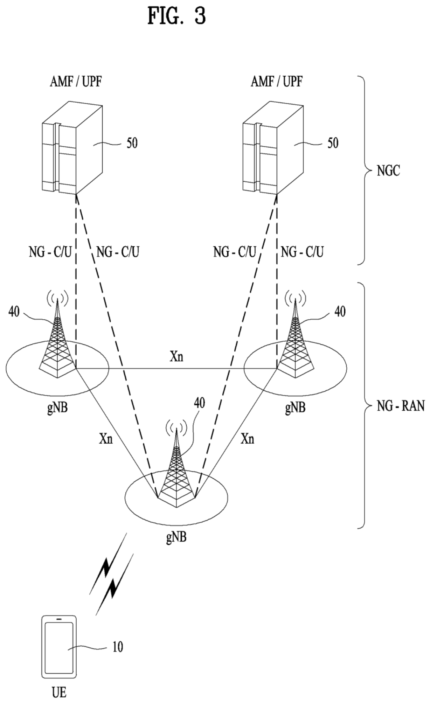

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

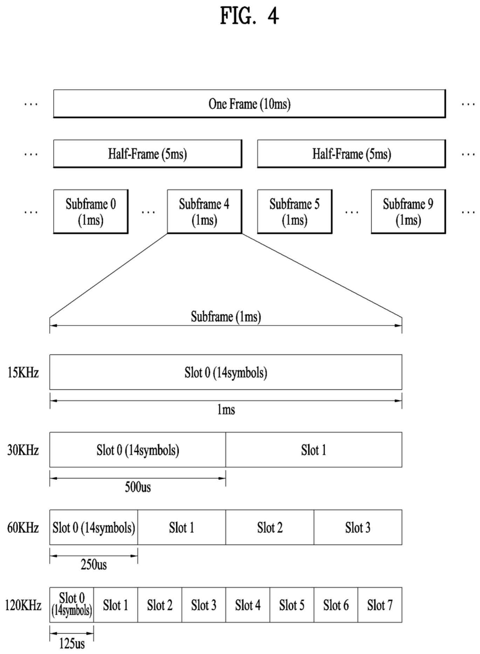

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

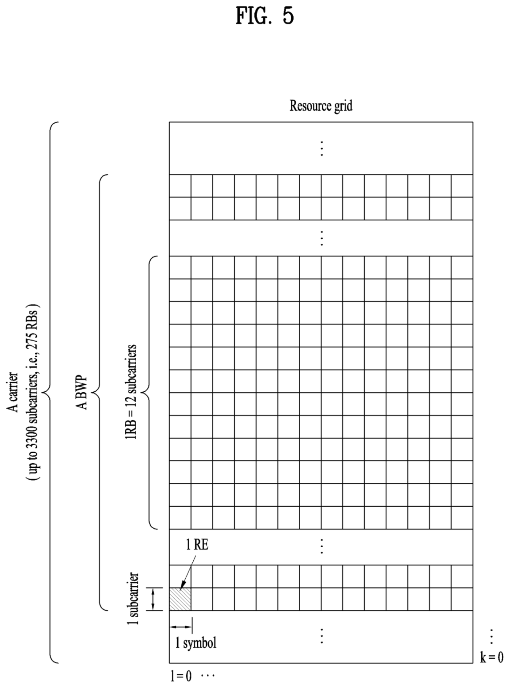

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

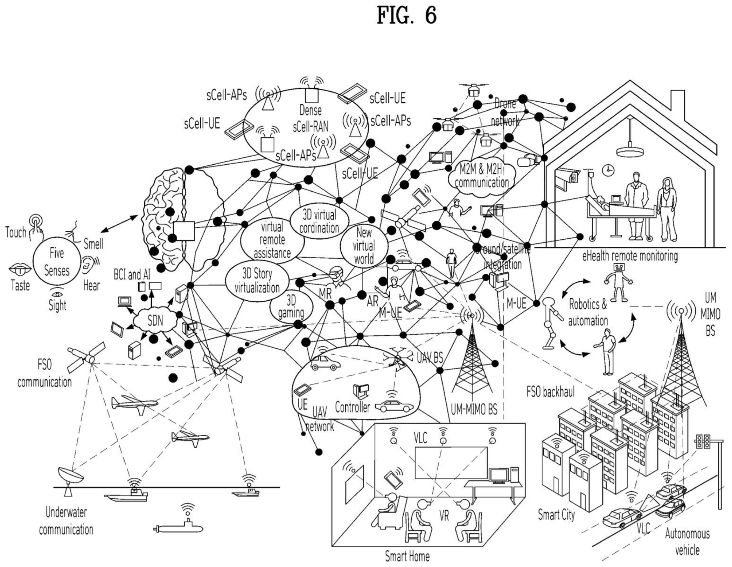

FIG. 6 shows a communication structure providable in a 6G system, based on an embodiment of the present disclosure. The embodiment of FIG. 6 may be combined with various embodiments of the present disclosure.

In 6G, new network characteristics may be as follows.

- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.

- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves, which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

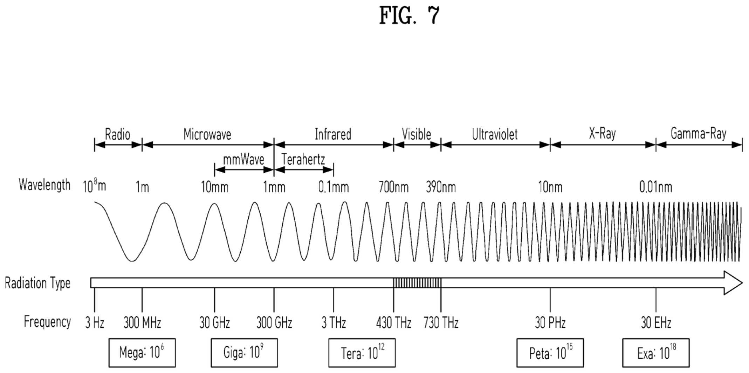

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.

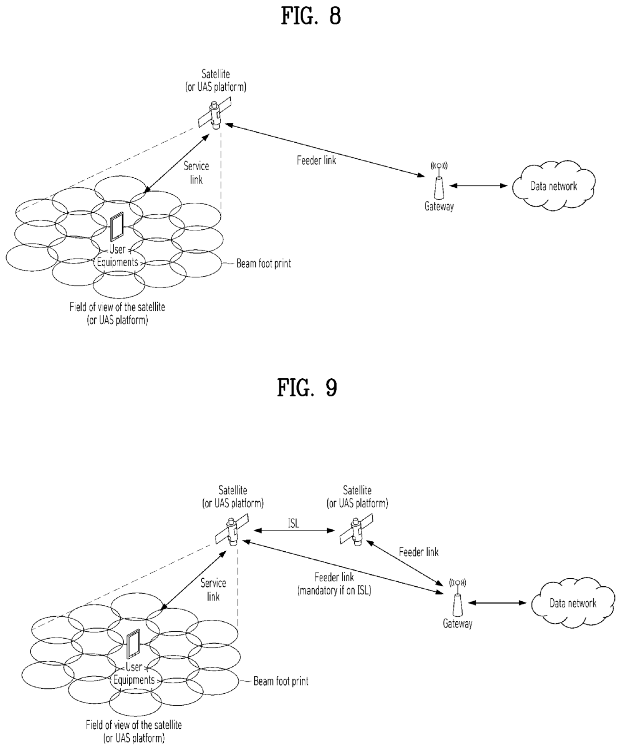

- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.

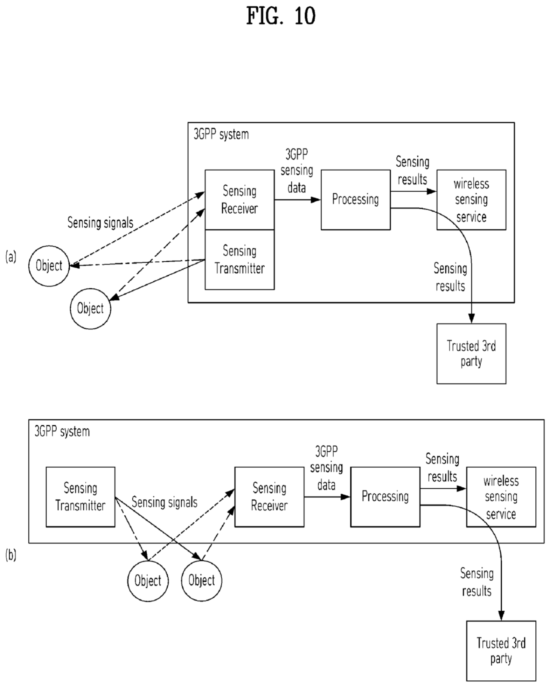

- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

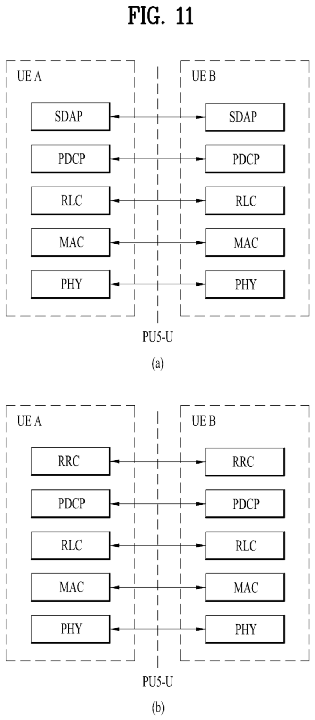

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

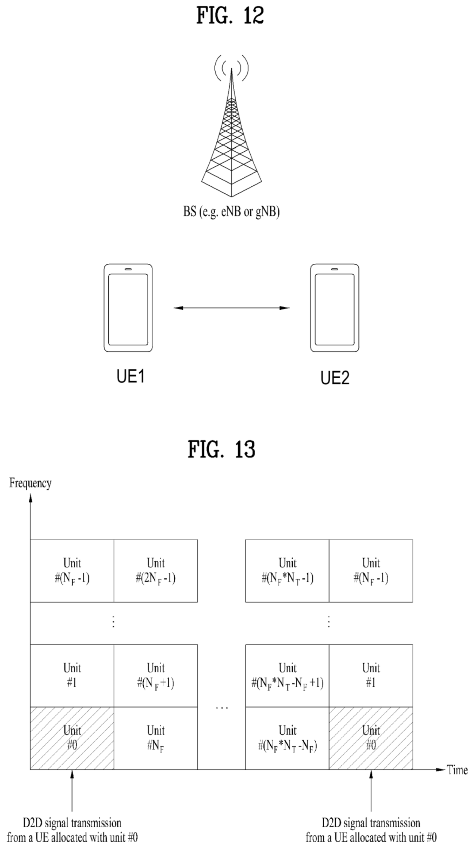

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

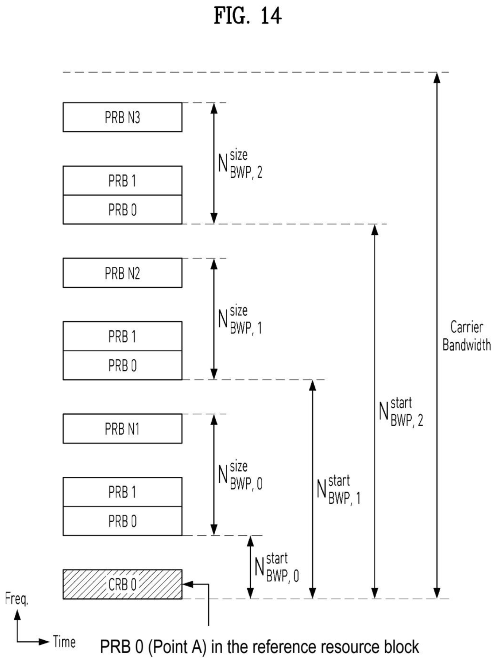

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

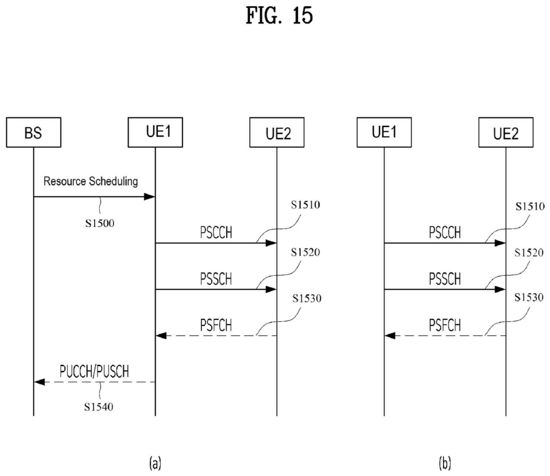

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subChannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

OTDOA (Observed Time Difference of Arrival)

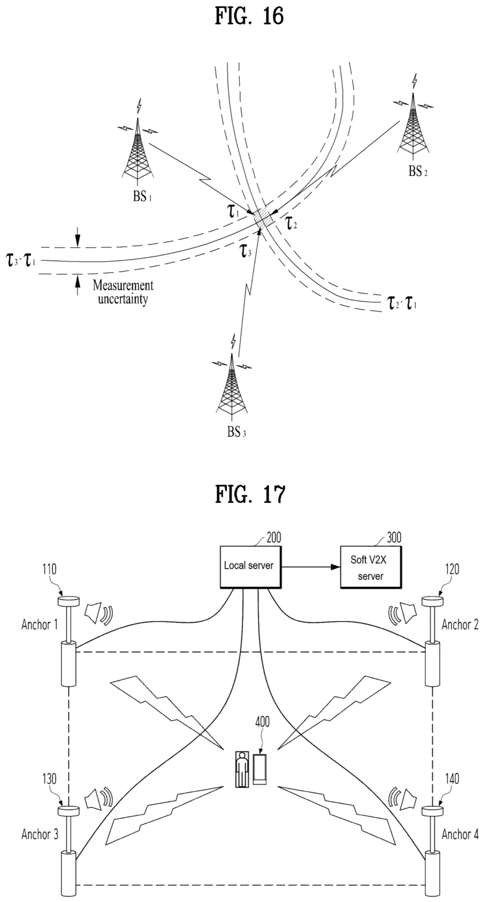

FIG. 16 is a diagram illustrating an observed time difference of arrival (OTDOA) positioning method, to which the embodiment is applicable;
The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

- E-UTRAN measurement: ng-eNB Rx-Tx time difference, timing advance (TADV), and/or AoA

Here, TADV may be divided into Type 1 and Type 2 as follows.

$$T_{ADV} \text{ Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

## Hyperbolic position calculation correction method in acoustic positioning system

An acoustic positioning system may be used to assist position measurement of the global positioning system (GPS). However, in the acoustic positioning system, since the position of a UE and the position of an anchor or anchor node (hereinafter, anchor) are not on the same plane (for example, due to a height difference between the anchor and the UE), distortion may occur in position measurement based on TDoA. Hereinafter, a method for minimizing such distortion is described in detail.

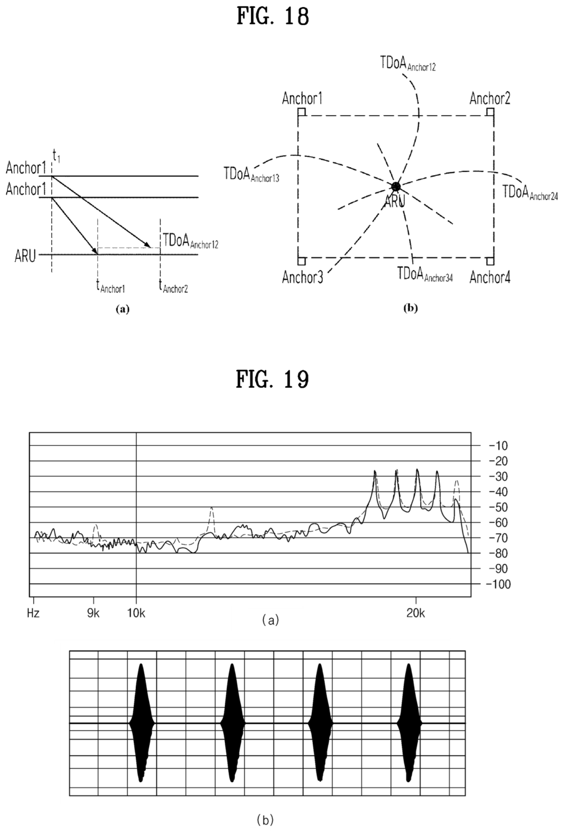

FIG. 17 and FIG. 18 are diagrams for explaining an acoustic positioning method.

The acoustic positioning system may be used to assist GPS positioning in a wireless communication system.

Specifically, referring to FIG. 17, four anchors or RSUs 110, 120, 130, and 140 in a predefined geographic area may generate acoustic signals for acoustic positioning to improve positioning performance. A local server 200 may transmit a synchronized acoustic signal to a surrounding UE 400 through the RSUs 110, 120, 130, and 140. For example, the four anchors or RSUs 110, 120, 130, and 140 may generate acoustic signals synchronized at the local server 220 of the acoustic positioning system and transmit the acoustic signals through speaker units or the like. The UE 400 (or a SoftV2X device of a VRU) may perform relative positioning with each of the RSUs based on the acoustic signals and estimate/-measure the absolute position of the UE (or VRU) based on positioning parameters (at least one parameter received/-configured by a SoftV2X server 300 or a network) and absolute positions of the RSUs 110, 120, 130, and 140.

Referring to FIG. 18(a), anchor 1 and anchor 2 may simultaneously transmit acoustic signals at a first time (t1). The UE 400 may receive the acoustic signals from each of anchor 1 and anchor 2 and calculate a reception time difference between the received acoustic signals. Thereafter, as described with reference to FIG. 16, the UE 400 may calculate a hyperbola based on the reception time difference and measure the position of the UE based on the hyperbola. Specifically, referring to FIG. 18(b), the UE 400 may receive acoustic signals from each of anchor 1, anchor 2, anchor 3, and anchor 4. The UE 400 may calculate a reception time difference between anchor 1 and anchor 2 (TDoA anchor12), a reception time difference between anchor 1 and anchor 3 (TDoA anchor13), a reception time difference between anchor 2 and anchor 4 (TDoA anchor24), and a reception time difference between anchor 3 and anchor 4 (TDoA anchor34). The UE 400 may calculate hyperbolas corresponding to the calculated reception time differences and measure/estimate the position thereof based on intersections of the hyperbolas.

Hereinafter, the characteristics of acoustic waves used for acoustic positioning are described in detail.

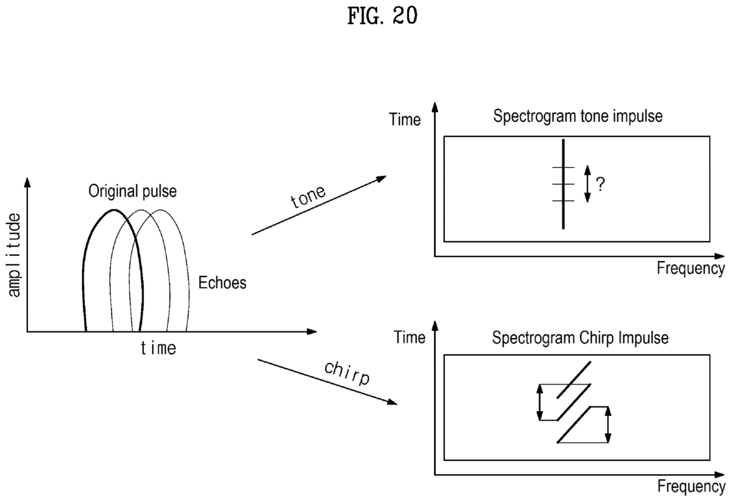

FIG. 19 and FIG. 20 are diagrams for explaining characteristics of acoustic signals used in an acoustic positioning system.

Referring to FIG. 19(a), an acoustic signal in an acoustic positioning system may be an inaudible acoustic signal having a frequency band within 18 kHz to 21 kHz, which is an inaudible frequency. Anchors may generate and transmit such inaudible acoustic signals to a UE. Referring to FIG. 19(b), the acoustic signal generated/transmitted by the anchor may include a chirp signal robust against multipath and noise. In addition, a HANNING smoothing technique may be used to eliminate noise in the audible frequency band caused by image generation of the acoustic signal. The transmission period of the acoustic signal may be set to 340 msec in order to minimize delays due to measurement distance and effects of multipath.

Referring to FIG. 20, a chirp signal may be more robust to multipath than a tone signal. For example, when correlation is used, it may be difficult for the UE to identify the beginning and end of the original signal in the acoustic signal received under multipath conditions. In contrast, even if multipath occurs, a chirp signal allows the beginning and end of an original signal to be identified, and at least one multipath signal may be easily separated from the original signal. Accordingly, the UE may easily estimate/identify the original signal/first signal (for example, a signal with LOS secured) from the received acoustic signal.

Hereinafter, methods for measuring the position of a UE based on such acoustic signals and (functional) configurations of the UE therefor are described in detail.

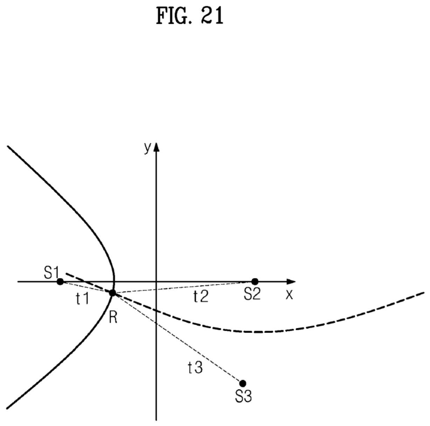

FIG. 21 is a diagram for explaining a method of measuring the position of a UE based on an acoustic signal.

Referring to FIG. 21, the acoustic positioning method may operate within a maximum range of 50 meters in both horizontal and vertical directions. In this case, since the measurement range may be recognized as a plane and changes in the Z-axis may be ignored, the UE may measure/calculate the position thereof based on an intersection of two hyperbolas calculated using only three anchors.

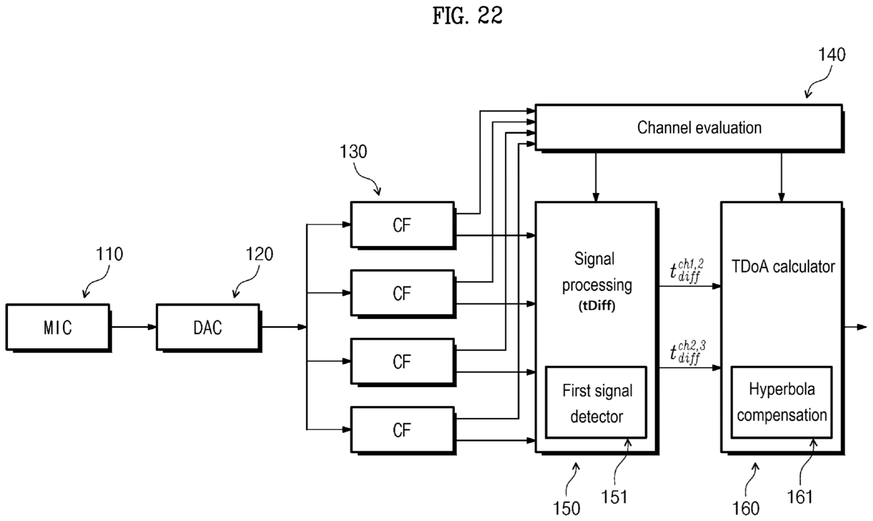

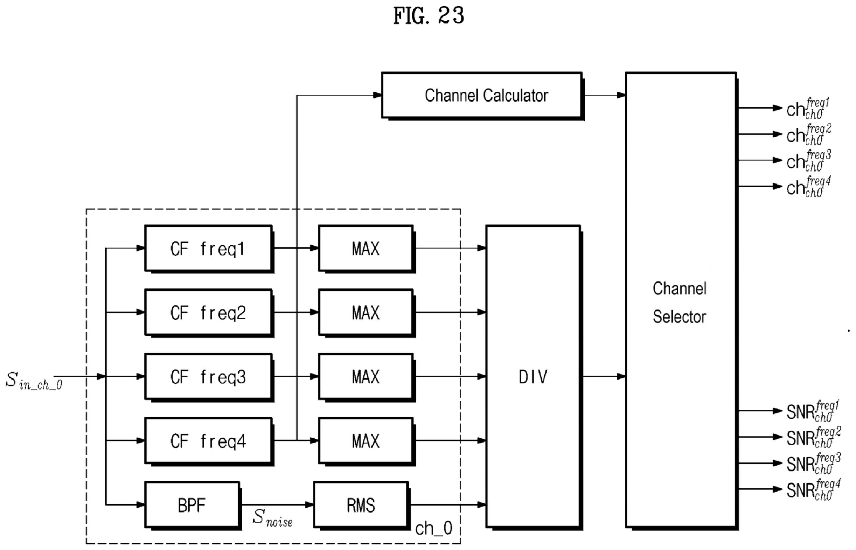

FIG. 22 and FIG. 23 are diagrams for explaining a method of measuring the position of a UE based on an acoustic signal and a block diagram of an apparatus for the same.

Referring to FIG. 22, the UE may convert an acoustic signal into an electrical signal through a microphone (MIC) 110. Thereafter, the UE may convert/transform the electrical signal (or analog signal) into a digital signal through an analog-to-digital converter (ADC) block (120). The UE may separate acoustic signals corresponding to respective channels from the acoustic signal (or digital signal) through a correlation filter (CF) 130. The UE may analyze/measure the channel state of each signal in a channel evaluation block (140). For example, a plurality of channels may be configured for a plurality of anchors, and each anchor may transmit an acoustic signal through one channel. The UE may receive acoustic signals (acoustic signals synchronized and transmitted) for a plurality of anchors through a plurality of channels. In this case, the UE may separate acoustic signals for each channel or each anchor through the CF (130) and evaluate/measure the reception quality/channel state of the acoustic signals for each channel or each anchor through the channel evaluation block.

Next, the UE calculates a reception time difference ($t_{Diff}$) value between selected anchors through a signal selection algorithm (151) of a signal processing block (150) based on the measured channel information as described above. For example, when acoustic signals are received from a first channel to a third channel (i.e., from a first anchor to a third anchor), the UE may calculate a reception time difference of acoustic signals between the first channel and the second channel ($t_{diff}^{ch12}$) and a reception time difference of acoustic signals between the second channel and the third channel ($t_{diff}^{ch23}$). The UE may calculate/measure the position of the UE corresponding to the reception time differences through a TDoA calculation block

(160). Meanwhile, in order to compensate for distortion due to positions/heights/arrangements of anchors, the UE may correct the calculated UE position/position value through a hyperbolic compensation block (161).

Meanwhile, referring to FIG. 23, the channel evaluation block (140) may calculate a signal-to-noise ratio (SNR) and a channel response value to measure the channel state for each channel. Specifically, the channel-specific acoustic signals input to the channel evaluation block (140) pass through the CF matched to a frequency band corresponding to the inaudible frequency band (18 to 21 kHz). The channel evaluation block (140) may calculate maximum energy for each channel-specific acoustic signal using a MAX block. Furthermore, the channel evaluation block (140) may measure a noise level in a frequency band where no acoustic signal is received through a bandpass filter (BPF) and a root mean square (RMS) block. Thereafter, the channel evaluation block (140) may calculate the SNR, which is a ratio of a signal level to a noise level, for each channel through a divider (DIV) block. The channel selector or channel selection algorithm (151) may select an optimal acoustic signal from among the acoustic signals received in the plurality of channels based on the calculated SNR values.

Alternatively, the UE may further quantify the state of each channel based on the channel response status from the acoustic signal processed through the CF operation. To secure high positioning performance, an acoustic signal with Line-of-Sight (LOS) needs to be selected. Hereinafter, methods for the UE to estimate/identify a first signal (e.g., original signal) in an LOS or Non-Line-of-Sight (NLOS) environment are described in detail. Here, the first signal or original signal is a signal unaffected by multipath and may be a reference signal for determining the reception time of an acoustic signal.

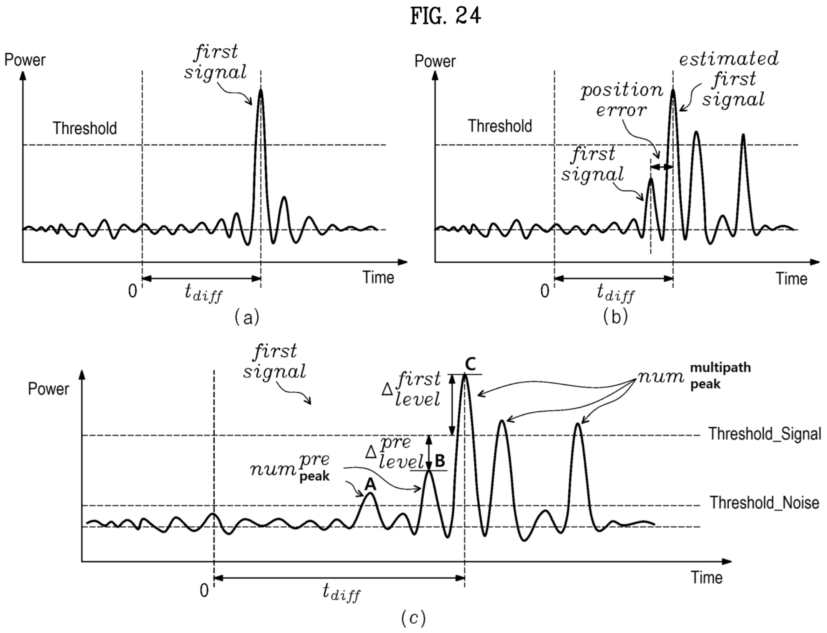

FIG. 24 is a diagram for explaining a method in which a UE estimates a first signal among multipath signals.

Referring to FIG. 24(a), when an LOS environment is present between an anchor and the UE, an original signal or a first signal of an acoustic signal received on a corresponding channel (i.e., a channel for an anchor having the LOS environment) may have the highest reception power. In this case, the UE may specify/estimate the time at which the highest power is detected in the acoustic signal as the reception time of the original signal/first signal. In contrast, referring to FIG. 24(b), when an NLOS environment is present between the anchor and the UE, the first signal/original signal may have lower reception power than a signal received through multipath. In this case, the UE may incorrectly estimate the first signal/original signal as the signal received through multipath, and a positioning error may occur/be reflected by the difference between the actual reception time of the first signal/original signal and the reception time of the signal received through multipath.

To prevent such incorrect estimation of the first signal/original signal, the channel evaluation block (140 of FIG. 22) may quantify reception power in each channel and information related to multipath as illustrated in FIG. 24(c). For the quantification, two thresholds may be configured. One of the two thresholds may be Threshold_Signal for signal determination, and the other may be Threshold_Noise for evaluating a noise level. Specifically, the channel evaluation block or the UE may measure a value ($\Delta_{level}^{first}$) of a first signal level exceeding Threshold_Signal. The channel evaluation block or the UE may identify a specific signal exceeding Threshold_Noise among signals (or times) preceding signals (or times) exceeding Threshold_Signal. The channel evaluation block or the UE may measure a value ($\Delta_{level}^{pre}$) indicating how close the signal level of the identified signal is to Threshold_Signal or how different the signal level of the identified signal is from Threshold_Signal. Next, for channel state evaluation, the channel evaluation block or the UE may additionally measure the number of multipath signals exceeding Threshold_Signal with respect to the first signal ($num_{peak}^{multipath}$), and may also measure the number of signals/times exceeding Threshold_Noise among the signals preceding the estimated first signal ($num_{peak}^{pre}$).

As described above, the UE may select/identify the first signal serving as a reference for determining the reception time of the acoustic signal based on the quantified values of the channel state. For example, the UE may preferentially use a signal having high values of $\Delta_{level}^{first}$ and $\Delta_{level}^{pre}$, which are indicators representing the strength of the signal (per time zone) and preferentially use a signal having smaller values of $num_{peak}^{pre}$ and $num_{peak}^{multipath}$, which represent the channel state. For example, in FIG. 24(c), the UE may estimate a third signal (C) as the first signal based on signal strength. However, the UE may finally estimate/identify a second signal (B) as the first signal based on the quantified values of the channel state, and may determine the timing corresponding to the second signal (B) as the reception timing of the acoustic signal.

Subsequently, the UE may select three optimal anchors through the signal processing block, calculate two hyperbolas using acoustic signals (where transmission timing is synchronized) in channels corresponding to the three anchors, and estimate the position of the UE based on the intersection of the two hyperbolas. Accordingly, in a narrow-area environment, since calculation is capable of being performed in 2D coordinates rather than 3D coordinates, the UE may obtain the position of the UE through the intersection of two hyperbolas. However, the heights of the UE and the anchors may differ, and in this case, distortion may occur in a positioning result of a UE located around/adjacent to a specific anchor. Accordingly, such distortion needs to be compensated, and methods of compensating for the distortion are described in detail.

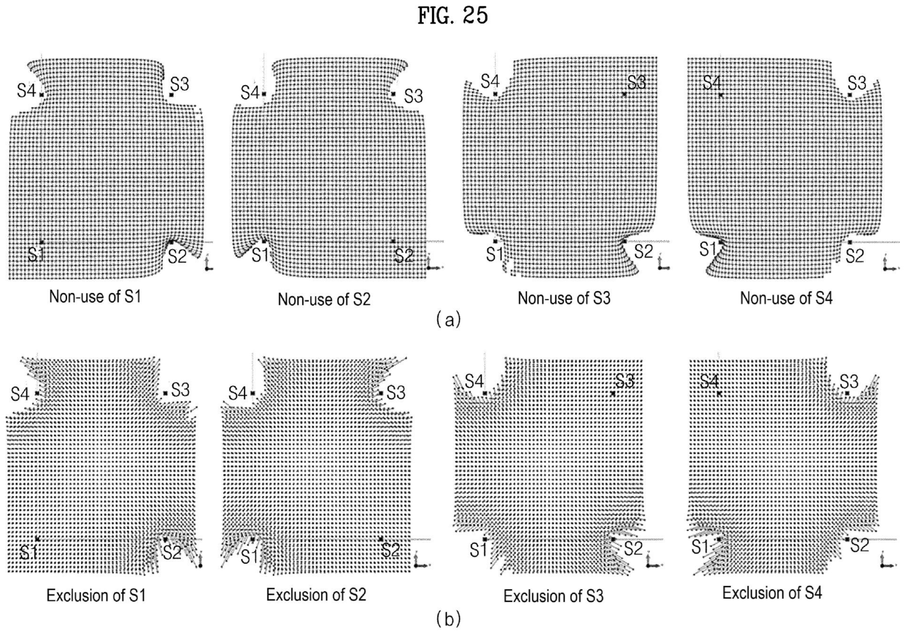

FIGS. 25 to 28 are diagrams for explaining a method of compensating for distortion occurring when a UE performs positioning using three anchors.

Referring to FIG. 25(a), when a UE selects three anchors to measure/calculate the position in a 2D environment, positioning distortion may occur. The UE may store vector correction fields in advance or obtain the fields from a BS/anchor to compensate for the positioning distortion. By compensating for the positioning distortion using one of the pre-stored/obtained vector correction fields, the UE may reduce the computational load compared to directly compensating for the positioning distortion. The vector correction field may vary depending on the positions/arrangements of the anchors used by the UE for positioning. For example, when multiple anchors are installed in a specific area, the degree of distortion or a distortion field, which may occur in positioning in the specific area, may be calculated through measurement or simulation. For example, the degree of distortion or the distortion field may be calculated based on a difference between the position of the UE calculated without considering the height of anchors and the actual position of the UE. The vector correction field may be generated through calculation/determination of vectors capable of eliminating the difference between the position of the UE calculated without considering the height of anchors and the actual position of the UE (or the position of the UE calculated considering the height). In this case, as illustrated in FIG. 25(b), the vector correction field capable of compensating for distortion may be calculated/defined based on the degree of distortion or the distortion field calculated according to the arrangements/positions of the anchors.

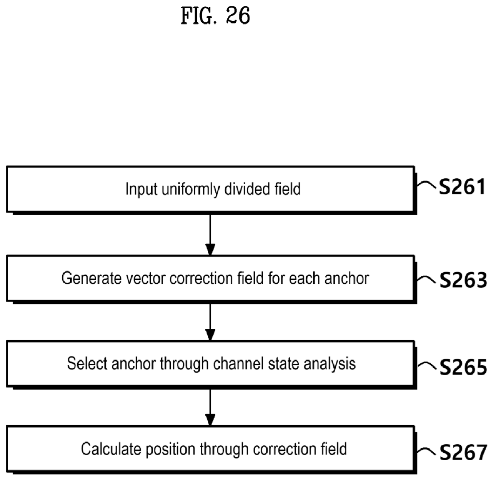

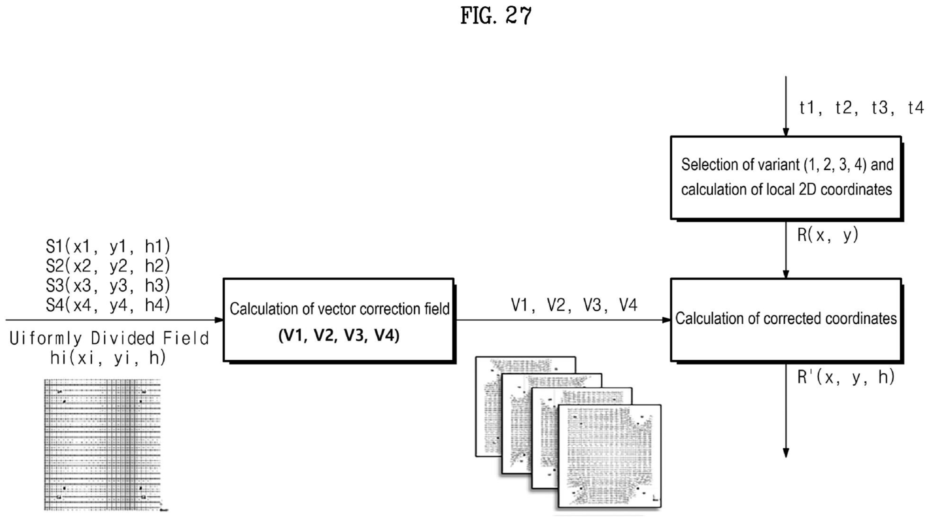

Referring to FIG. 26, when the arrangements/configurations of anchors for a specific area is completed, a network (or a UE) may receive a uniformly divided field (see FIG. 27) for all combinations of the arrangements/configurations of the anchors capable of being used for positioning (S261). The network (or the UE) may generate a vector correction field for each of the arrangements/configurations of the anchors (S263). For example, the network (or the UE) may calculate/generate a degree of distortion/distortion field for each of the arrangements/configurations of the anchors through measurement or simulation. The network (or the UE) may calculate a vector correction field for compensating for the degree of distortion/distortion field for each of the arrangements/configurations of the anchors. Accordingly, the network (or the UE) may pre-calculate/define a plurality of vector correction fields for a plurality of arrangements/configurations of the anchors. When the network calculates/defines a plurality of vector correction fields, the network may provide the UE with information on the plurality of vector correction fields in advance. For example, when the network provides an anchor list for anchors to a UE that enters the specific area, the network may also provide information on the plurality of vector correction fields together. Next, the UE may select three anchors from among a plurality of anchors in the specific area through the channel evaluation block (S265). The UE may correct a measured position value using the three anchors based on a vector correction field corresponding to the positions/arrangements of the selected three anchors among the plurality of predefined vector correction fields and measure/calculate the position thereof based on the corrected position value (S267).

For example, referring to FIG. 27, a network (or a UE) may receive information on positions/heights (S1 (x1, y1, h1), S2 (x2, y2, h2), S3 (x3, y3, h3), S4 (x4, y4, h4)) of anchors (S1, S2, S3, and S4) for a predetermined area. The network (or the UE) may calculate distortion information/distortion fields for all combinations of three selectable anchors among the anchors (S1, S2, S3, and S4) through a predefined simulation and generate/calculate vector correction fields (V1, V2, V3, and V4) for the combinations of the three selectable anchors based on the calculated distortion information/distortion fields. Thereafter, the UE may select three anchors among the anchors (S1, S2, S3, and S4) and calculate a local 2D measurement value (x, y, i.e., latitude and longitude), which is a TDoA measurement value, based on acoustic signals received from the three anchors. For example, the UE may receive acoustic signals from each of the anchors (S1, S2, S3, and S4) and calculate reception times (t1, t2, t3, t4) for the acoustic signals received from the anchors. The UE may select the three anchors among the anchors (S1, S2, S3, and S4) based on the quality/strength of the acoustic signals and calculate a local 2D measurement value, which is a TDoA measurement value, based on reception times corresponding to the three anchors. The UE may select a vector correction field corresponding to the positions/arrangements of the three anchors selected by the UE from among a plurality of vector correction fields, which are provided by the network or directly generated/calculated. The UE may correct the calculated local 2D measurement value (or local 2D coordinate value) based on the selected vector correction field.

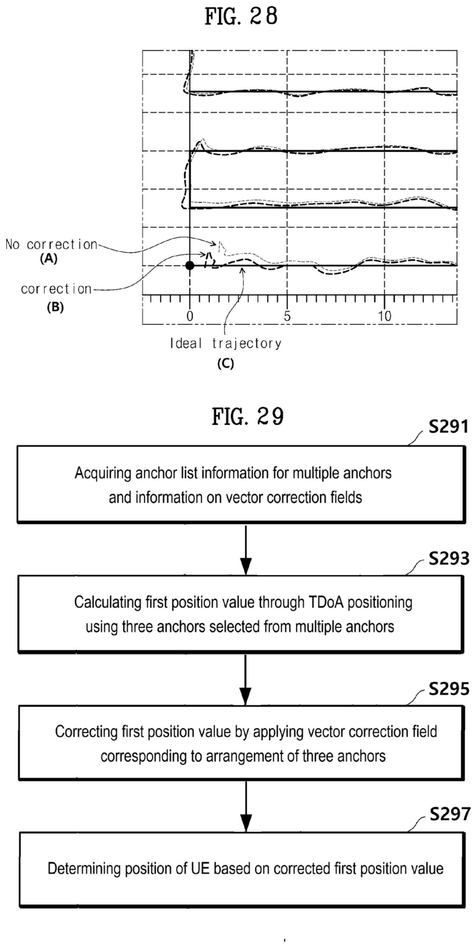

Referring to FIG. 28, a corrected measurement value based on the above-described vector correction field may be located on an ideal trajectory. For example, when such a vector correction field is not used, an uncorrected measurement value (for example, a 2D position/coordinate value calculated without considering the height of an anchor) may have large distortion near anchors/positions adjacent to the anchors, as shown by line A in FIG. 28. In contrast, a corrected measurement value using the vector correction field may be located on line C (ideal trajectory line), as shown by line B in FIG. 28.

As described above, the proposed disclosure may significantly reduce the computational load of position measurement based on TDoA by calculating measurement values/coordinate values based on a 2D environment in hyperbolic calculation of TDoA. In addition, the proposed disclosure may maximize positioning accuracy by compensating for distortion (particularly, distortion occurring at positions adjacent to anchors), which may occur in calculating measurement values/coordinate values based on a 2D environment, through a predefined vector correction field. Furthermore, the proposed disclosure may effectively select three anchors to be used for positioning through quantification (regarding quality) of received acoustic signals, thereby clearly identifying a first signal among multipath signals in an NLOS environment. That is, the proposed disclosure may simplify computation of position measurement through TDoA calculation for a 2D environment and effectively compensate for distortion that may occur in the TDoA calculation for the 2D environment through a predefined vector correction field, thereby minimizing degradation of positioning performance due to simplification of TDoA computation.

FIG. 29 is a diagram for explaining a method in which a UE corrects a position using a vector correction field.

Referring to FIG. 29, the UE may obtain anchor list information for a plurality of anchors and information on vector correction fields from a network or an anchor (S291). The anchor list may include IDs of the plurality of anchors located in a specific area related to the position of the UE and information on positions or heights of the plurality of anchors. The vector correction fields may include information on vectors capable of compensating for errors of 2D position values calculated without considering height based on each combination of three selectable anchors among the plurality of anchors, as described with reference to FIGS. 24 to 28. Here, the plurality of anchors may transmit synchronized acoustic signals for positioning through speakers or the like.

For example, as shown in FIG. 25(a), the network or the anchor may generate/calculate distortion fields through first position values (2D position values) calculated using three anchors without considering the heights of the anchors for the specific area related to the anchor list. As shown in FIG. 25(b), the network or the anchor may generate/calculate vector correction fields by calculating vectors for shifting the first position values to actual position values (e.g., position values calculated considering the heights of the anchors). Alternatively, the UE may directly calculate/generate the distortion fields and the vector correction fields for each combination of the three selectable anchors among the plurality of anchors based on the positions and heights of the anchors included in the anchor list information, in the same manner as described with reference to FIGS. 25 to 28.

Alternatively, since the speed of an acoustic signal is greatly affected by ambient temperature and humidity, the vector correction field may be corrected based on at least one of the measured temperature and humidity.

Next, the UE may calculate a first position value through TDoA positioning using the three anchors selected from among the plurality of anchors (S293). For example, as described with reference to FIG. 24, the UE may quantify channel states for each anchor or each channel in order to select the three anchors and select the three anchors to be used for TDoA positioning from among the plurality of anchors based on the quantified channel states. In this case, to reduce the computational load of position measurement, the UE may calculate the first position value without considering the heights of the three anchors (i.e., under the assumption that the three anchors and the UE are located on a plane). That is, since the UE calculates the first position value without considering reception time differences due to height differences between the three anchors and the UE, the computational load of TDoA positioning may be greatly reduced.

Next, the UE may correct the first position value by applying a vector correction field corresponding to the arrangement of the three anchors among a plurality of vector correction fields (S295). As described with reference to FIGS. 25 to 28, the UE may obtain a second position value (e.g., a position value calculated considering the heights of the three anchors) where an error due to the heights of the three anchors is removed, by applying a vector corresponding to the first position value among vectors included in the vector correction field.

Alternatively, the UE may correct the first position value using the vector correction field only when one of the reception time differences calculated using the three anchors is greater than or equal to a specific threshold time. For example, when the UE is located adjacent to one of the three anchors, a reception time difference greater than the specific threshold time may be calculated. That is, the UE may determine that the UE is located considerably close to one of the three anchors when the reception time difference is greater than or equal to the specific threshold time. In this case, since an error of the position value calculated without considering the heights of the anchors is too large to be ignored, the UE may correct the first position value using the vector correction field. In contrast, when one of the reception time differences calculated using the three anchors is less than the specific threshold time (that is, when the error due to the heights of the anchors is within an acceptable range), the UE may determine the first position value as the position of the UE without correcting the first position value using the vector correction field.

Next, the UE may determine the position of the UE based on the corrected first position value (S297). For example, the UE may determine a coordinate value corresponding to the corrected first position value, which is a second position value, as the position of the UE.

As described above, the proposed disclosure may significantly reduce the computational load of position measurement based on TDoA by calculating measurement values/coordinate values based on a 2D environment in hyperbolic calculation of TDoA. Alternatively, the proposed disclosure may simplify computation of position measurement by calculating TDoA position values for a 2D environment and effectively compensate for errors, which may occur in position values calculated without considering the heights of anchor nodes, through a predefined vector correction field, thereby minimizing degradation of positioning performance due to simplification of TDoA computation. Alternatively, the proposed disclosure may effectively select three anchors to be used for positioning through quantification (regarding quality) of received acoustic signals, thereby clearly identifying a first signal among multipath signals in an NLOS environment.

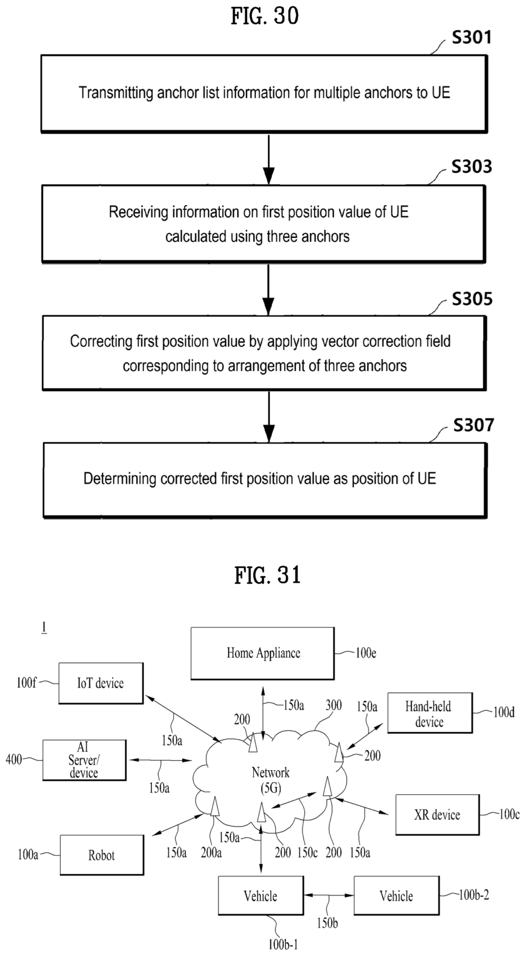

FIG. 30 is a diagram for explaining a method in which a network corrects the position of a UE using a vector correction field.

Referring to FIG. 30, the network or an anchor (hereinafter referred to as the network) may transmit anchor list information for a plurality of anchors to a UE (S301). As described above, the anchor list information may include information on the positions and/or heights of anchors located in a geographic area related to the UE.

Next, the network may receive information on a first position value of the UE, which is calculated using three anchors among the plurality of anchors, from the UE (S303). For example, the first position value may be a position value calculated based on a reception time difference (TDoA) of signals (acoustic signals) received from the three anchors, as described above. Alternatively, the network may further receive indication information from the UE indicating that the first position value is calculated without considering the heights of the three anchors.

Next, based on the first position value being calculated without considering the heights of the three anchors, the network may correct the first position value by applying a vector correction field corresponding to the arrangement of the three anchors among predefined vector correction fields (S305). As described with reference to FIGS. 25 to 27, the network may pre-calculate a plurality of vector correction fields through a simulation based on the heights/positions of anchors deployed in the geographic area. The network may correct the first position value by applying, to the first position value, the vector correction field corresponding to the arrangement of the three anchors related to the first position value among the plurality of vector correction fields. As described above, the network may remove an error value generated when the heights of the three anchors are not considered from the first position value corrected by applying the vector correction field.

Thereafter, the network may determine the corrected first position value as the position of the UE (S307). Alternatively, the network may provide the UE with the determined position of the UE.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 31 illustrates a communication system applied to the present disclosure.

Referring to FIG. 31, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

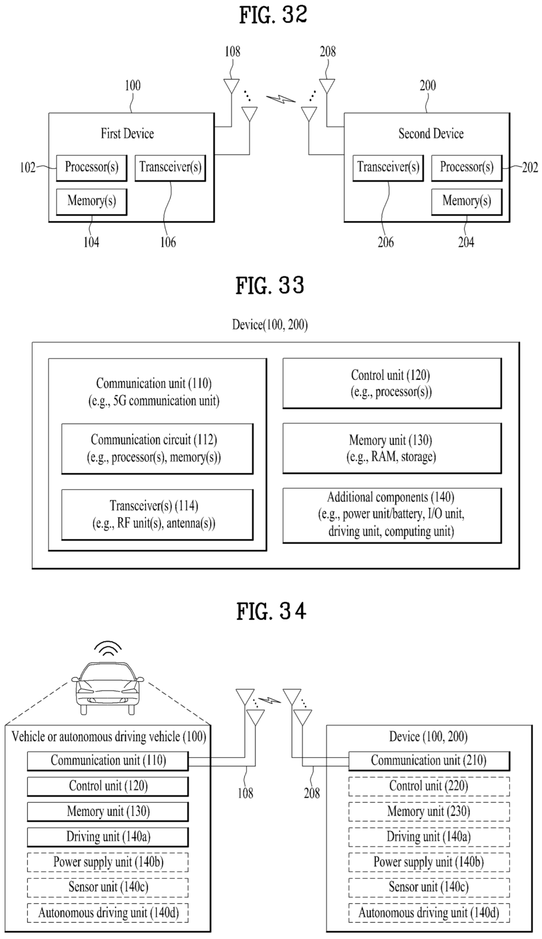

FIG. 32 illustrates a wireless device applicable to the present disclosure.

Referring to FIG. 32, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 31.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device 100 or a UE may include the processor(s) 102 connected to the transceiver(s) 106 and the memory(s) 104. The memory(s) 104 may include at least one program capable of performing operations related to the embodiments described with reference to FIGS. 17 to 30. Alternatively, the first wireless device 100 or the UE may further include a microphone/acoustic receiver (not shown) for receiving acoustic signals.

The processor(s) 102 may control the transceiver(s) 106 to acquire anchor list information for a plurality of anchors and information on vector correction fields; calculate a first position value based on TDoA positioning using three anchors selected from among the plurality of anchors; based on the first position value being calculated without considering heights of the three anchors, correct the first position value by applying a vector correction field corresponding to an arrangement of the three anchors among the vector correction fields; and determine a position of the UE based on the corrected first position value.

Alternatively, there is provided a processing device configured to control the UE including the processor(s) 102 and the memory(s) 104. The processing device includes: at least one processor; and at least one memory connected to the at least one processor and storing instructions that, when executed by the at least one processor, cause the UE to: acquire anchor list information for a plurality of anchors and information on vector correction fields; calculate a first position value based on TDoA positioning using three anchors selected from among the plurality of anchors; based on the first position value being calculated without considering heights of the three anchors, correct the first position value by applying a vector correction field corresponding to an arrangement of the three anchors among the vector correction fields; and determine a position of the UE based on the corrected first position value.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device 200 or a network may include the processor(s) 202 connected to the transceiver(s) 206 and the memory(s) 204. The memory(s) 204 may include at least one program capable of performing operations related to the embodiments described with reference to FIGS. 17 to 30. Alternatively, the second wireless device 200 or the network may further include a speaker (not shown) capable of generating acoustic signals.

For example, the second device 200 or the network may control the transceiver(s) 206 to transmit anchor list information for a plurality of anchors to a UE; receive, from the UE, information on a first position value of the UE calculated using three anchors among the plurality of anchors; based on the first position value being calculated without considering heights of the three anchors, correct the first position value by applying a vector correction field corresponding to an arrangement of the three anchors among predefined vector correction fields; and determine the corrected first position value as the position of the UE.

Alternatively, there is provided a processing device configured to control the network including the processor(s) 202 and the memory(s) 204. The processing device includes: at least one processor; and at least one memory connected to the at least one processor and storing instructions that, when executed by the at least one processor, cause the network to: transmit anchor list information for a plurality of anchors to a UE; receive, from the UE, information on a first position value of the UE calculated using three anchors among the plurality of anchors; based on the first position value being calculated without considering heights of the three anchors, correct the first position value by applying a vector correction field corresponding to an arrangement of the three anchors among predefined vector correction fields; and determine the corrected first position value as the position of the UE.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

FIG. 33 illustrates another example of a wireless device applied to the present disclosure. The wireless device may be implemented in various forms according to a use-case/service (refer to FIG. 31)

Referring to FIG. 33, wireless devices 100 and 200 may correspond to the wireless devices 100 and 200 of FIG.

32 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 32. For example, the transceiver(s) 114 may include the one or more transceivers 106 and 206 and/or the one or more antennas 108 and 208 of FIG. 32. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 31), the vehicles (100b-1 and 100b-2 of FIG. 31), the XR device (100c of FIG. 31), the hand-held device (100d of FIG. 31), the home appliance (100e of FIG. 31), the IoT device (100f of FIG. 31), a digital broadcast terminal, a hologram device, a public safety device, an MTC device, a medicine device, a fintech device (or a finance device), a security device, a climate/environment device, the AI server/device (400 of FIG. 31), the BSs (200 of FIG. 31), a network node, etc. The wireless device may be used in a mobile or fixed place according to a use-example/service.

In FIG. 33, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Examples of vehicles or autonomous vehicles to which the present disclosure is applied

FIG. 34 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 34, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 31, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

## INDUSTRIAL APPLICABILITY

The above-described embodiments of the present disclosure are applicable to various mobile communication systems.

## Claims

1. A method of measuring a position by a user equipment (UE) in a wireless communication system, the method comprising:

   acquiring anchor list information for a plurality of anchors and information on vector correction fields;
   calculating a first position value based on Time Difference of Arrival (TDoA) positioning using three anchors selected from among the plurality of anchors;
   based on the first position value being calculated without considering heights of the three anchors, correcting the first position value by applying a vector correction field corresponding to an arrangement of the three anchors among the vector correction fields; and
   determining a position of the UE based on the corrected first position value.

2. The method of claim 1, wherein the vector correction field comprises correction vectors calculated in advance based on a difference between a position value calculated without considering the heights of the three anchors and a position value calculated considering the heights of the three anchors.

3. The method of claim 2, wherein the vector correction fields are generated in advance for combinations of three selectable anchors among the plurality of anchors.

4. The method of claim 1, wherein based on that one of reception time differences calculated using the three anchors is greater than or equal to a specific threshold time, the first position value is corrected by applying the vector correction field.

5. The method of claim 1, wherein the UE quantifies quality of acoustic signals received from the plurality of anchors and selects the three anchors based on the quantified quality of the acoustic signals.

6. The method of claim 5, wherein the quantified quality of the acoustic signals comprises information on a number of signals having a signal strength greater than or equal to a first threshold value and a number of signals having a signal strength between the first threshold value and a second threshold value for each of the plurality of anchors.

7. The method of claim 1, wherein the vector correction fields are corrected based on at least one of temperature and humidity.

8. The method of claim 1, wherein the UE performs the TDoA positioning using acoustic signals received from the three anchors.

9. A computer-readable recording medium having recorded thereon a program for executing the method of Claim 1.

10. A user equipment (UE) configured to measure a position in a wireless communication system, the UE comprising:

    a radio frequency (RF) transceiver; and
    a processor connected to the RF transceiver,
    wherein the processor is configured to:

       control the RF transceiver to acquire anchor list information for a plurality of anchors and information on vector correction fields;
       calculate a first position value based on Time Difference of Arrival (TDoA) positioning using three anchors selected from among the plurality of anchors;
       based on the first position value being calculated without considering heights of the three anchors, correct the first position value by applying a vector correction field corresponding to an arrangement of the three anchors among the vector correction fields; and

determine a position of the UE based on the corrected first position value.

11. A processing device configured to control a user equipment (UE) measuring a position in a wireless communication system, the processing device comprising:

at least one processor; and
at least one memory connected to the at least one processor and storing instructions that, when executed by the at least one processor, cause the UE to:

acquire anchor list information for a plurality of anchors and information on vector correction fields;
calculate a first position value based on Time Difference of Arrival (TDoA) positioning using three anchors selected from among the plurality of anchors;
based on the first position value being calculated without considering heights of the three anchors, correct the first position value by applying a vector correction field corresponding to an arrangement of the three anchors among the vector correction fields; and
determine a position of the UE based on the corrected first position value.

12. A method of measuring a position of a user equipment (UE) by a network in a wireless communication system, the method comprising:

transmitting anchor list information for a plurality of anchors to the UE;
receiving, from the UE, information on a first position value of the UE calculated using three anchors among the plurality of anchors;
based on the first position value being calculated without considering heights of the three anchors, correcting the first position value by applying a vector correction field corresponding to an arrangement of the three anchors among predefined vector correction fields; and
determining the corrected first position value as the position of the UE.

13. A computer-readable recording medium having recorded thereon a program for executing the method of Claim 12.

14. A network configured to measure a position of a user equipment (UE) in a wireless communication system, the network comprising:

a radio frequency (RF) transceiver; and
a processor connected to the RF transceiver,
wherein the processor is configured to:

control the RF transceiver to transmit anchor list information for a plurality of anchors to the UE;
receive, from the UE, information on a first position value of the UE calculated using three anchors among the plurality of anchors;
based on the first position value being calculated without considering heights of the three anchors, correct the first position value by applying a vector correction field corresponding to an arrangement of the three anchors among predefined vector correction fields; and
determine the corrected first position value as the position of the UE.

15. A processing device configured to control a network measuring a position of a user equipment (UE) in a wireless communication system, the processing device comprising:

at least one processor; and
at least one memory connected to the at least one processor and storing instructions that, when executed by the at least one processor, cause the network to:

transmit anchor list information for a plurality of anchors to the UE;
receive, from the UE, information on a first position value of the UE calculated using three anchors among the plurality of anchors;
based on the first position value being calculated without considering heights of the three anchors, correct the first position value by applying a vector correction field corresponding to an arrangement of the three anchors among predefined vector correction fields; and

determine the corrected first position value as the position of the UE.

EP 4 711 799 A1

FIG. 1

# FIG. 2

# FIG. 3

# FIG. 4

# FIG. 5

FIG. 6

EP 4 711 799 A1

EP 4 711 799 A1

FIG. 7

| | Radio | Microwave | | Infrared | Visible | Ultraviolet | X-Ray | Gamma-Ray |

mmWave | Terahertz

Wavelength: $10^8$m  1m  10mm  1mm  0.1mm  700nm  390nm  10nm  0.01nm

Radiation Type

Frequency: 3 Hz  300 MHz  30 GHz  300 GHz  3 THz  430 THz  730 THz  30 PHz  30 EHz

Mega: $10^6$  Giga: $10^9$  Tera: $10^{12}$  Peta: $10^{15}$  Exa: $10^{18}$

# FIG. 8

# FIG. 9

# FIG. 10

# FIG. 11

PU5-U

(a)

PU5-U

(b)

## FIG. 12

BS (e.g. eNB or gNB)

UE1                    UE2

## FIG. 13

Frequency

| Unit #(N_F -1) | Unit #(2N_F -1) | ... | Unit #(N_F*N_T -1) | Unit #(N_F -1) |

⋮                    ⋮

| Unit #1 | Unit #(N_F +1) | ... | Unit #(N_F*N_T -N_F +1) | Unit #1 |

| Unit #0 | Unit #N_F | ... | Unit #(N_F*N_T -N_F) | Unit #0 |

Time

D2D signal transmission
from a UE allocated with unit #0

D2D signal transmission
from a UE allocated with unit #0

# FIG. 14

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

Carrier Bandwidth

$N_{BWP, 2}^{start}$

$N_{BWP, 1}^{start}$

$N_{BWP, 0}^{start}$

Freq.

Time

PRB 0 (Point A) in the reference resource block

# FIG. 15

(a)                    (b)

## FIG. 16

## FIG. 17

# FIG. 18

(a)

(b)

# FIG. 19

(a)

(b)

FIG. 20

EP 4 711 799 A1

FIG. 21

**FIG. 22**

FIG. 23

EP 4 711 799 A1

FIG. 24

FIG. 25

Non-use of S1    Non-use of S2    Non-use of S3    Non-use of S4

(a)

Exclusion of S1    Exclusion of S2    Exclusion of S3    Exclusion of S4

(b)

EP 4 711 799 A1

FIG. 26

| Input uniformly divided field | S261 |
|---|---|

↓

| Generate vector correction field for each anchor | S263 |
|---|---|

↓

| Select anchor through channel state analysis | S265 |
|---|---|

↓

| Calculate position through correction field | S267 |
|---|---|

FIG. 27

## FIG. 2 8

No correction
(A)

correction
(B)

Ideal trajectory
(C)

## FIG. 2 9

S291

Acquiring anchor list information for multiple anchors
and information on vector correction fields

S293

Calculating first position value through TDoA positioning
using three anchors selected from multiple anchors

S295

Correcting first position value by applying vector correction field
corresponding to arrangement of three anchors

S297

Determining position of UE based on corrected first position value

## FIG. 30

**S301**

Transmitting anchor list information for multiple anchors to UE

↓

**S303**

Receiving information on first position value of UE calculated using three anchors

↓

**S305**

Correcting first position value by applying vector correction field corresponding to arrangement of three anchors

↓

**S307**

Determining corrected first position value as position of UE

## FIG. 31

1

Home Appliance —100e

100f— IoT device

—150a  300  150a

200  Hand-held device —100d

150a

400— AI Server/ device

150a

200

Network (5G)

XR device —100c

150a

100a— Robot

150a 200a

150a  200 150c 200 150a

Vehicle  Vehicle —100b-2

150b

100b-1

## FIG. 32

## FIG. 33

Device(100, 200)

## FIG. 34

# EP 4 711 799 A1

## INTERNATIONAL SEARCH REPORT

| International application No. |
| --- |
| **PCT/KR2024/006281** |

### A. CLASSIFICATION OF SUBJECT MATTER

**G01S 5/18**(2006.01)i; **H04W 4/40**(2018.01)i

According to International Patent Classification (IPC) or to both national classification and IPC

### B. FIELDS SEARCHED

Minimum documentation searched (classification system followed by classification symbols)

G01S 5/18(2006.01); B60W 40/12(2006.01); G01S 5/02(2010.01); G01S 5/04(2006.01); H04W 24/00(2009.01); H04W 64/00(2009.01); H04W 84/18(2009.01); H04W 88/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 앵커(anchor), 높이(height), 위치(location), 보정(compensation)

### C. DOCUMENTS CONSIDERED TO BE RELEVANT

| Category* | Citation of document, with indication, where appropriate, of the relevant passages | Relevant to claim No. |
| --- | --- | --- |
| Y | US 2021-0173037 A1 (HUAWEI TECHNOLOGIES CO., LTD.) 10 June 2021 (2021-06-10)<br>See paragraphs [0016] and [0046]-[0091], claims 1, 7 and 15 and figures 1-2. | 1-15 |
| Y | US 2023-0131659 A1 (APTIV TECHNOLOGIES LIMITED) 27 April 2023 (2023-04-27)<br>See paragraphs [0054], [0122]-[0203] and [0233], claims 1 and 7-8 and figures 1-5 and 15. | 1-15 |
| Y | US 11356805 B2 (BANAVAR, Mahesh K. et al.) 07 June 2022 (2022-06-07)<br>See columns 3-4, claim 1 and figures 1A-1B. | 5-6,8 |
| A | US 2016-0334498 A1 (UCL BUSINESS PLC) 17 November 2016 (2016-11-17)<br>See claims 1-8 and figures 1-24. | 1-15 |
| A | KR 10-2010-0077414 A (IUCF-HYU (INDUSTRY-UNIVERSITY COOPERATION FOUNDATION HANYANG UNIVERSITY)) 08 July 2010 (2010-07-08)<br>See claims 1-11 and figures 1-9. | 1-15 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 August 2024** | **26 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| US | 2021-0173037 | A1 | 10 June 2021 | CN | 112369085 | A | 12 February 2021 |
| | | | | EP | 3804421 | A1 | 14 April 2021 |
| | | | | WO | 2020-011379 | A1 | 16 January 2020 |
| US | 2023-0131659 | A1 | 27 April 2023 | CN | 116016576 | A | 25 April 2023 |
| | | | | EP | 4170389 | A1 | 26 April 2023 |
| | | | | US | 11772661 | B2 | 03 October 2023 |
| US | 11356805 | B2 | 07 June 2022 | US | 2020-0228926 | A1 | 16 July 2020 |
| US | 2016-0334498 | A1 | 17 November 2016 | EP | 3100069 | A1 | 07 December 2016 |
| | | | | WO | 2015-114313 | A1 | 06 August 2015 |
| KR | 10-2010-0077414 | A | 08 July 2010 | KR | 10-1082083 | B1 | 10 November 2011 |

Form PCT/ISA/210 (patent family annex) (July 2022)